# EUROPEAN PATENT SPECIFICATION

(11) **EP 1 096 994 B1**
(45) Date of publication and mention of the grant of the patent: **01.10.2003**
(21) Application number: 99930550.1
(22) Date of filing: 22.06.1999
(51) Int. Cl.: B01F 17/00

(54) **LIQUID THICKENER FOR SURFACTANT SYSTEMS**
FLÜSSIGES VERDICKUNGSMITTEL FÜR OBERFLÄCHENAKTIVE SYSTEME
EPAISSISSANT LIQUIDE POUR SYSTEMES DE TENSIOACTIFS

(30) Priority: 23.06.1998 US 90324 P
(43) Date of publication of application: 09.05.2001
(60) Divisional application: 03008078.2
(73) Proprietor: UNION CARBIDE CHEMICALS & PLASTICS TECHNOLOGY CORPORATION, Danbury, Connecticut 06817-0001 (US)
(72) Inventor: POLOVSKY, Stuart, Barry, Matawan, NJ 07747 (US); BARBEITO, Carmella, Edison, NJ 08820 (US); LI, Wing, Kin, New Brunswick, NJ 08816 (US); DiANTONIO, Edward, F., Staten Island, NY 10303 (US); KREEGER, Russell, Lowell, Flemington, NJ 08822 (US)
(74) Representative: Hayes, Adrian Chetwynd
(86) International application number: US9914072
(87) International publication number: WO99067017

(56) References cited:
- US-A- 4 450 090
- US-A- 4 687 843
- US-A- 5 502 175

## Description

The present invention relates to a composition comprising alkoxylated, lipophilic polyol compounds having about three moles of lipophilic substitutuents per mole of polyol and, more specifically, to the use of such composition as thickeners in liquid surfactant compositions.

Liquid compositions containing surfactants, e.g., shampoos, dishwashing liquids and other personal care and industrial products, typically contain thickeners in order to viscosify the liquid compositions sufficiently to enable convenient handling. Often, the thickeners comprise an alkoxylated polyol containing lipophilic substituents, e.g., ethoxylated methyl glucose esterified with a fatty acid. Such thickeners are typically alkoxylated to an extent sufficient to provide water-solubility and provide viscosification to the liquid surfactant composition. The lipophilic substituent, e.g., fatty acid, typically provides associative thickening characteristics to the thickener.

Often, the thickeners are introduced to the liquid surfactant compositions in solid form and mixed under conditions effective to dissolve the thickener into the liquid surfactant composition and cause significant viscosity increases, e.g., up to about 2,000 to 100,000 centipoise ("cP") or higher. Frequently, the mixing must be conducted at elevated temperatures, e.g., from about 50 to 80°C, in order to promote the dissolution of the thickener and obtain the desired viscosity enhancement (known in the art as "hot processing"). However, formulators of products comprising thickened, surfactant-containing liquids, e.g., shampoos, desire the ability to formulate their products at ambient temperatures, e.g., from 20 to 30°C (known in the art as "cold processing"). Additionally, formulators also desire thickeners which can be introduced to the liquid surfactant compositions in a liquid form rather than a solid form. The ability to introduce the thickener in a liquid form can provide a formulator with a greater degree of accuracy in introducing the correct amount of thickener to the liquid surfactant system and also better facilitate automated processing.

Accordingly, improved compositions suitable for use as thickeners in liquid surfactant systems are desired. Preferably, the thickeners can be introduced by cold processing and in a liquid state. Methods for using the compositions to thicken liquid compositions comprising surfactants are also desired such a composition is povided by the invention as defined in claim 1.

Quite surprisingly, it has been found in accordance with the present invention that the presence of a sufficient portion of the alkoxylated glucose derivatives, such as ethoxylated, esterified metal glucosides having lipophilic substituents in the form of hydrocarbon or substituted hydrocarbon moieties with from 8 to 30 carbon atoms, wherein at least 25% of the alkoxylated glucose derivatives have three moles of the lipophilic substituents per mole of the glucose can enhance the ability of the composition to thicken a liquid surfactant system, preferably at cold processing temperatures.

The polyols suitable for use as starting materials for forming component a) in accordance with the present invention are glucose and its derivatives.

Preferred polyol starting materials for use in accordance with the present invention are glycosides, e.g., glucosides, galactosides, monosaccharides, oligosaccharides having up to about 10 saccharide repeat units per molecule and sucrose. Especially preferred glucosides include alkyl glucosides, such as for example, methyl glucoside, ethyl glucoside, propyl glucoside, butyl glucoside and amyl glucoside.

Such polyols are commercially available.

Suitable reagents for alkoxylating the polyols are alkylene oxides, such as, for example, ethylene oxide, propylene oxide, butylene oxide and mixtures thereof. Other alkoxylating reagents, e.g., higher alkylene oxides, may be used in accordance with the present invention. Alkylene oxides suitable for use in accordance with the present invention are commercially available. The amount of alkoxylation in accordance with the present invention is that which is effective to provide water solubility and viscosification in a liquid surfactant composition. Typically, such amounts range from 50 to 400, preferably from 80 to 180 and more preferably from 100 to 160 moles of alkylene oxide per mole of polyol. Methods for alkoxylating polyols, e.g. by direct alkoxylation, are known to those skilled in the art. Alternatively, partially alkoxylated methyl glucosides, e.g., GLUCAM™ E-20 (PEG-20 methyl glucoside) available from Amerchol Corporation, Edison, NJ, can be used as a starting material which can then be further alkoxylated to contain the desired degree of alkoxylation.

The lipophilic reagents suitable to derivatize the polyols have hydrocarbon or substituted hydrocarbon moieties with from 8 to 30, preferably from 12 to 26 and more preferably from 16 to 22 carbon atoms per molecule. The particular structure of the lipophilic reagents is not critical to the present invention and may, for example, be alkyl, aryl, alkylaryl, alkenyl and may be cyclic, branched or straight. Typically, the reagents and fatty acids, fatty esters, epoxides, halides glycidyl ethers, or vegetable or animal oils. The reagents typically provide either an ester or ether linkage to the polyol. Stated another way, in the case of a glucose derivative, for example, the ether or ester is typically attached to the glucose derivative indirectly through a polyoxyalkylene chain.

Examples of suitable fatty acids include natural or synthetic saturated or unsaturated acids which are linear or branched. The fatty acids can be used alone or as a mixture. Natural fatty acids include, for example, saturated or unsaturated linear fatty acids such as caproic acid, enanthic acid, caprylic acid, pelargonic acid, decanoic acid, lauric acid, myristic acid, palmitic acid, stearic acid, linolic acid, oleic acid, capric acid and undecanoic acid which are typically obtained by hydrolyzing vegetable oils and animal oils such as coconuts oils, palm oil, tallow, linseed oil and soybean oil. Examples of synthetic fatty acids, include linear or branched fatty acids prepared by oxidizing olefin polymers. It is also possible to use fatty acids derived from microorganisms such as, for example, γ-linolenic acid. Further, as the lower alkyl ester of the fatty acid, alkyl esters having 1 to 8 carbon atoms such as methyl, ethyl or propyl ester of the fatty acid described above can be used. The fatty acid esters of hexose or the alkyl glycoside thereof can be synthesized by using various known methods, including ester synthesis using lipase and the like: for example; (1) an ester exchange reaction between starting oils or fats and a hexose or its alkylglycoside, (2) an ester exchange reaction between a lower alkyl ester of a fatty acid and a hexose or its alkyl glycoside, or (3) an ester synthesis between a fatty acid and a hexose or its alkyl glycoside. In addition, a synthesis process using a fatty acid chloride and a hexose or its alkyl glycoside may also be employed.

Examples of other suitable lipophilic reagents include glycidyl ethers, e.g., nonylphenylglycidyl ether or dodecylphenyl glycidyl ether, alpha-olefin epoxides, e.g., 1,2-epoxyhexadecane and their respective chlorohydrins, or alkyl halides, e.g., dodecylbromide, and the above-mentioned vegetable and animal oils. Halogenated products of fatty acids can also be used as the lipophilic reagent.

The amount of the lipophilic reagent used to derivatize the polyols of the present invention is preferably effective to promote associative thickening behavior of the polyol derivatives when present in a liquid surfactant composition. The average substitution level of the lipophilic substituent is about 3, e.g., from 2.5 to 4, preferably from 2.5 to 3.9 and more preferably from 2.8 to 3.6, moles per mole of polyol. Details concerning the derivatization of polyols to comprise lipophilic substituents are known to those skilled in the art. The average amount of lipophilic substituent per mole of polyol (referred to in the art as Degree of Substitution "DS") can be determined by any technique known to those skilled in the art, e.g., by nuclear magnetic resonance spectroscopy ("NMR"). The lipophilic reagents suitable for use in accordance with the present invention are commercially available.

In accordance with the present invention, the alkoxylated, lipophilic polyol compounds comprise a mixture of compounds substituted with varying amounts of the lipophilic substituent depending upon the available hydroxyl groups on the polyol starting material. At least 25%, preferably at least 50% and more preferably at least 75% of the polyol derivatives in the composition have three moles of the lipophilic substituent per mole of polyol. Typically, the balance of the composition comprises polyol derivatives having one, two or four moles of the lipophilic substituent per mole of polyol. Typically, less than about 75%, preferably less than about 50% and more preferably less than about 25% of the polyols in the composition comprise one, two or four moles of the lipophilic substituent per mole of polyol.

The sequence in which the alkylene oxide and lipophilic substituents are reacted onto the polyol is not critical to the present invention. In one aspect, the alkoxylation reaction is conducted first, followed by substitution of the lipophilic substituent onto the polyol. In another aspect of the invention, the polyol is first substituted with the lipophilic substituent followed by alkoxylation. In still yet another aspect of the invention, the polyol is partially esterified, e.g., to comprise one or two moles (on average) of the lipophilic substituent per mole of polyol, then ethoxylated, then subsequently esterified, e.g., to comprise about three moles of the lipophilic substituent per mole of polyol. Alternatively, the polyol can be partially ethoxylated, esterified and then ethoxylated again to the desired level. Moreover, the starting material can be the polyol, a partially alkoxylated polyol or a polyol that is partially reacted with the lipophilic reagent, or both.

The derivatizations are typically conducted under subatmospheric pressure, e.g., from 0.101 to 101 kPa (0.001 to 1.0 atmospheres), and at a temperature in the range of 110 to 180°C for the alkoxylation step and 120 to 200 °C for the lipophilic substitution step. Catalysts may or may not be used for the derivatizations. Typically, however, catalysts are employed to enhance the reaction rate. The catalysts can be acidic, basic, or neutral. Preferred catalysts for the alkoxylation step include Na, NaOCH₃, KOH, NaOH, K₂CO₃, Na₂CO₃. Preferred catalysts for the lipophilic substitution step include Na₂CO₃, KOH, NaOH, acids including p-toluenesulfonic acid ("p-TSA"), H₂SO₄, HCI, and others including organic titanates, e.g., tetraisopropyl titanate available as Tyzor^{TM} catalyst from DuPont Company, Wilmington, DE. Further details concerning the manufacture of alkoxylated, lipophilic polyol compounds are known to those skilled in the art and are described, for example, in U.S. Patent Nos. 4,687,843, 5,109,127, 5,501,813 and 5,502,175

The product produced from the derivatization reactions is typically in the form of a solid in a granulated or powdered form. The solid product is suitable for packaging and shipment to customers.

According to the invention, the alkoxylated, lipophilic polyol derivatives are dissolved in a suitable solvent to provide a liquid thickener suitable for use in viscosifying surfactant-containing liquid compositions. Preferably, the liquids are aqueous with or without additional water miscible liquids. According to the invention the solvents are alkylene glycols having 2 to 5 carbon atoms per molecule, such as propylene glycol, ethylene glycol, butylene glycol, propane diol and butane diol. The product is provided in a liquid form, and comprises from 20 to 60 preferably from 30 to 50 of the polyol derivative with the balance comprising the liquid solvent and any desired additives, such as, for example, preservatives, biocides, etc., which are generally present in minor amounts, e.g. less than about 5 wt % based on the total weight of the liquid composition. In addition, when in liquid form it is preferred that the liquid containing the thickener has a viscosity which is low enough to permit the liquid to be pumped or poured without difficulty. Typically, the viscosity is less than about 6,000 mPa (cP), preferably less than about 4,000 mPa (4,000 cP). As used herein, the term viscosity means the viscosity measured with a Brookfield Viscometer with a suitable spindle and rotational speed as determined by one skilled in the art, e.g., spindle 6 to 10 rpm.

In one preferred aspect of the invention when the polyol is a glucose derivative, the liquid composition comprises from 10 to 30 wt % water, from 30 to 50 wt % propylene glycol and from 30 to 50 wt % of the glucose derivative. An especially preferred composition comprises about 20 wt % water, about 40 wt % propylene glycol and about 40 wt % of the glucose derivative.

The alkoxylated, lipophilic polyol derivatives of the present invention have a variety of end used applications, such as, for example, personal care applications and industrial applications. Typical personal care applications include, for example, pharmaceutical and cosmetic compositions, such as, for example, shampoos, conditioners, ointments, skin creams, lotions and soaps. Typical industrial applications include, for example, use as viscosity adjusters for general fluids handling and for surfactant applications, such as, dishwashing liquids, laundry detergents, suspension aids, as adhesion promoters and coating materials.

In one aspect of the invention, the composition comprising the alkoxylated lipophilic polyol derivatives are used for thickening liquid compositions comprising one or more surfactants as defined in claim 11. Illustrative surfactants may include: anionics including fatty acid soaps, alkyl sulfates, alkyl ether sulfates, alkyl or aryl sulfonates, sulfosuccinatos, sarcosinatos, alkyl glucose esters or their alkoxylates and in particular sodium lauryl sulfate, ammonium lauryl sulfate, triethanolamine lauryl sulfate, sodium laureth sulfate, alpha olefin sulfonate, disodium laureth sulfosuccinates, triethanolamine stearate; nonionics including methyl glucose esters or their alkoxylates, fatty acid alkanol amides, polyglycol ethers or their alkyl or aryl derivatives, hydroxylated lanolin, lanolin alcohols and in particular oleth-20, ceteareth-20, methyl glucose dioleate, methyl glucose stearate, glycerol monostearate, cocoyl diethanolamide, nonoxynal-7 and octoxynol-8; cationics including alkyl trimethyl ammonium salts, quaternized amides of ethylene diamine, alkyl pyridinium salts and in particular cetrimonium chloride, stearalkonium chloride and cetyl pyridinium chloride; and amphoterics including alkyl β-aminopropionates, betaines, alkyl imidazolines and in particular cocoamphocarboxy glycinate, cocamidopropyl betaine and caproamphocarboxy propionate.

A first liquid comprising the alkoxylated, lipophilic polyol compounds, can be combined with a second liquid comprising a surfactant under mixing conditions, in order to provide a viscosity enhancement of at least 10%, preferably at least 50%, more preferably at least 100% and most preferably at least 200%. As used herein, the term "Viscosity Enhancement" means the enhancement in viscosity, expressed as a percentage, in a surfactant-containing liquid composition between alkoxylated, lipophilic polyol compounds of the present invention compared to alkoxylated, lipophilic polyol compounds wherein a substantial fraction, e.g., at least 90%, of the compounds have about two moles, i.e., 1.5 to 2.5 moles, of lipophilic substituent per mole of polyol. For the measurement of Viscosity Enhancement, the mixing of the surfactant system is conducted at a temperature sufficient to dissolve the components, e.g., from ambient to 80°C, with adequate mixing (preferably with no foaming) for 2 to 3 hours. For determining Viscosity Enhancement, the alkoxylated, lipophilic polyol is utilized in the liquid surfactant composition at an active concentration of from 0.1 to 5 wt %, preferably from 0.1 to 1 wt %, based on the total weight of the liquid surfactant composition. For comparison purposes, the active concentration should be essentially the same. For this measurement a Brookfield RVT viscometer with a No. 6 spindle at 10 rpm is generally suitable. The viscosity measurement should be taken at a fixed temperature, e.g., 22.5°C. Also, the comparison should be made using polyol derivatives having similar alkylene oxide substitution levels, e.g., within ±30 alkylene oxide units, and a similar lipophilic substituent, e.g., within ±2 carbon atoms per molecule.

A preferred surfactant composition for determining the Viscosity Enhancement comprises the following ingredients combined as described below.

| **Ingredients** | **wt%** |
|---|---|
| Deionized Water | QS to 100 |
| Sodium Laureth Sulfate -2(26 wt% active) | 40.00 |
| Cocamidopropyl Betaine (35 wt% active) | 11.50 |
| DMDM Hydantoin | 0.4 |
| Thickener(40 wt% polyol compound, 40 wt% propylene glycol, 20 wt% water) | 1.25 |

**Procedure:** Add Sodium Laureth Sulfate -2 and Cocamidopropyl Betaine to the water in order, one at a time, until completely uniform before adding the next ingredient. Once uniform add the thickener with stirring and heat to 70°C. Once the thickener is totally dissolved start cooling system to 40°C. At 40°C add DMDM Hydantoin and continue to cool to room temperature. Record viscosity after 24 hours.

Quite advantageously, it has been found in accordance with the present invention that personal care products, e.g., shampoos, skin creams and the like, may provide the following desirable characteristics. In the case of shampoos and other hair care products; improved rinseability, feel, lathering, combing potential, synergy with other ingredients, clarity and salt tolerance may be obtained. In the case of skin care products; improved anti-irritation properties, fatting agents, moisturization and dermatological compatibility may be obtained.

A typical cleansing formulation for skin or hair comprising the alkoxylated, lipophilic polyol compounds of the present invention may contain the following ingredients and can be prepared as described below.

| **Ingredients** | **wt%** |
|---|---|
| Deionized Water | QS |
| Polyquaternium-10 | 0.20 |
| Sodium Laureth Sulfate (26wt% active) | 40.00 |
| Cocamidopropyl Betaine (35wt% active) | 11.50 |
| Disodium Laureth Sulfosuccinate (40wt% active) | 5.00 |
| Thickener (40 wt% polyol compound, 40 wt% propylene glycol, 20 wt% water) | 0.50 |
| DMDM Hydantoin | 0.40 |

**Procedure**: Add Polyquaternium-10 to room temperature deionized water with adequate agitation. When uniform heat to 70°C and mix until fully hydrated. Once fully hydrated add the remaining ingredients up until DMDM Hydantoin, one at a time in order, waiting until for each to be dissolved before adding the next. Allow to cool to 40°C. At 40°C add DMDM Hydantoin. Continue to cool to room temperature.

### EXAMPLES

The following examples are provided for illustrative purposes. In the examples, the amounts recited are given in weight percent unless otherwise indicated.

### EXAMPLE 1 (Comparative)

### PREPARATION OF PEG-120 METHYL GLUCOSE DIOLEATE-PG-WATER BLEND

A sample of PEG-120 Methyl Glucose Dioleate (available from Amerchol Corporation, Edison, NJ, under the tradename Glucamate^{TM} DOE-120) of 1000 grams ("g") was placed in a flask equipped for agitation and heating. To this was added 1000 g of propylene glycol and 500 g of water. The mixture was heated to 60°C with stirring. Upon melting and continued agitation, the solids dissolved and the solution become fluid and transparent.

The final liquid product was then allowed to cool to room temperature. The product had a viscosity of <200 mPa(cP) at room temperature.

### EXAMPLE 2

### PREPARATION OF PEG-100 METHYL GLUCOSIDE TRIOLEATE-PG-WATER BLEND

Into a one liter pressure reactor, 192 g of PEG-20 methyl glucoside (Glucam™ E-20, available from Amerchol Corporation, Edison, NJ) was poured. To this was added 1 g of KOH flakes. The vessel was closed and vacuum was increased as the temperature was increased to 140°C. The material was stirred and dried at 140°C and about 1·33 kPa (10mm Hg) for 0.5 hrs.

The system was purged three times with nitrogen and pressurized to 273 kPa (25 psig). The liquid was ethoxylated with 630 g of ethylene oxide at 140-145°C and 549 kPa (65 psig). After addition was completed, the reaction mixture was digested for one hour and purged with nitrogen to remove any residual oxide. This gave a hard white waxy material at room temperature of polyoxyethylene-100 methyl glucoside.

A sample of the above PEG-100 methyl glucoside (476 g) was placed in a flask and warmed to about 50°C until all material melted. Oxalic acid (4.4 g) was added in a small quantity of water. The mixture was stirred for about 0.5 hrs. and then dried under vacuum i.e., about 1·33 kPa (10 millimeters of mercury ("mm Hg")) at 110°C.

Vacuum was broken with nitrogen. Then methyl oleate (101 g) was added. The system was then purged with nitrogen. A low level of vacuum (80 kPa) ((∼600 mm Hg)) was developed. Using a syringe, 6.3 g of a catalyst (tetraisopropyl titanate, Tyzor™ from Dupont) was introduced and the mixture was allowed to agitate for 10 minutes. The temperature was then increased to about 150°C.

During the next 5 hrs, the vacuum was gradually increased to 26.6 kPa (200 mm Hg). At that point, the reaction was completed and the temperature was reduced to approximately 65°C. Vacuum was broken and 50 g of water was added to decompose catalyst. The mixture was agitated at 50°C for 1 hr. The pH was adjusted to 6-7 with aqueous oxalic acid and then dried at high vacuum (< 665 Pa) ((<5 mm Hg)) and 110°C for 0.5 hrs. The product was a brown waxy solid having the following analysis:

| Parameter | Value |
|---|---|
| pH (10% in water) | 6.9 |
| Acid Value | 0.6 |
| Saponification Value | 37.0 |
| Hydroxyl Value | 14.0 |

The mixture was cooled to 80°C as a solution of 566 g of propylene glycol and 283 g of water was added with stirring. This mixture was agitated for 0.5 hrs. while allowed to cool. This gave a light brown solution/blend and had a viscosity of about 2000 mPa (cP).

### EXAMPLE 3

### PREPARATION OF PEG-120 METHYL GLUCOSE TRIOLEATE-PG-WATER BLEND

Under a nitrogen atmosphere, a reactor was charged with 42 g of methyl oleate and 0.8 g of SAG-10 (anti-foaming agent from Witco Corp., Greenwich, CT). One thousand g of non-neutralized Glucamate^{TM} DOE-120 was then added. A head-space nitrogen purge was set and the mixture was heated to 175°C. Low vacuum, i.e., about 18.6 kPa (140 mmHg), was slowly applied when the temperature reached about 150°C.

Once the reaction mixture reached 175°C, the temperature was held there. After about an hour, the head-space purge was switched to a sparge. The vacuum was then slowly increased to about 665 Pa (5 mmHg). The mixtuxe was reacted for an additional 5 hours.

Near the end of the cookout time, a sample was removed for methyl oleate analysis by gas chromatography. The residual methyl oleate decreased to about 0.4% (w/w) and the reaction was cooled to about 80°C, the nitrogen sparge shut off, the vacuum broken with nitrogen, and the product neutralized with an aqueous solution containing 0.6 g of tartaric acid. The mixture was sampled for pH, color, hydroxyl number, and acid value and viscosity performance. The product, PEG-120 Methyl Glucose Trioleate, analysis showed:

| | |
|---|---|
| Performance Viscosity* | 65,000 mPa (cP) |
| Hydroxyl Value | 10 |
| GH Color | 7 |
| pH (10% in water) | 6.5 |
| Acid Value | 0.8 |

| | |
|---|---|
| * Performance Viscosity method as in Example #4 (Viscosity Measurement) | |

To prepare the blend, 1033 g of propylene glycol (PG) was added to the warm (70-80°C) product, PEG-120 Methyl Glucose Trioleate base prepared above. After the PG was thoroughly mixed in, heating was discontinued, and 517 g of deionized water was added. The mixture was agitated for about 20 minutes to insure a uniform solution which was then sampled and analyzed for pH, %PG and %water. The product solution was then cooled to about 40°C and stored. The blend had the following analysis:

| | |
|---|---|
| Water | 20% |
| Propylene glycol | 40% |
| pH (10% solids) | 6.5 |

### EXAMPLE 4

### VISCOSITY MEASURMENT

Liquid products similar to those prepared in Examples C-1, 2 and 3 were tested in a surfactant-containing liquid to determine the Viscosity Enhancement. The formulation and procedure used were as follows.

| **Ingredients** | **wt%** |
|---|---|
| Deionized Water | QS to 100 |
| Sodium Laureth Sulfate -2(26 wt% active) | 40.00 |
| Cocamidopropyl Betaine (35 wt% active) | 11.50 |
| DMDM Hydantoin | 0.4 |
| Thickener(40 wt% polyol compound, 40 wt% propylene glycol, 20 wt% water) | 1.25 |

**Procedure:** Add Sodium Laureth Sulfate -2 and Cocamidopropyl Betaine to the water in order, one at a time, until completely uniform before adding the next ingredient. Once uniform add the thickener with stirring and heat to 70°C. Once the thickener is totally dissolved start cooling system to 40°C. At 40°C add DMDM Hydantoin and continue to cool to room temperature. Record viscosity after 24 hours.

The viscosity was measured using a Brookfield RVT Viscometer with a No. 6 spindle at 10 rpm.

| Thickener Example | Viscosity, mPa (cP) | Viscosity Enhancement. % |
|---|---|---|
| C-1 | 13,500 | - |
| 2 | 56,000 | 315 |
| 3 | 65,000 | 381 |

### EXAMPLE 5

### PREPARATION OF BODY CLEANSING FORMULA

A body cleansing formula was prepared according to the following composition and procedure.

| **Ingredients** | **wt%** |
|---|---|
| Deionized Water | QS |
| Polyquaternium-10 | 0.20 |
| Sodium Laureth Sulfate (26wt% active) | 40.00 |
| Cocamidopropyl Betaine (35wt% active) | 11.50 |
| Disodium Laureth Sulfosuccinate (40wt% active) | 5.00 |
| Thickener (40 wt% polyol compound, 40 wt% propylene glycol, 20 wt% water) | 0.50 |
| DMDM Hydantoin | 0.40 |

**Procedure**: Add Polyquaternium-10 to room temperature deionized water with adequate agitation. When uniform heat to 70°C and mix until fully hydrated. Once fully hydrated add the remaining ingredients up until D1VID1VI Hydantoin, one at a time in order, waiting until for each to be dissolved before adding the next. Allow to cool to 40°C. At 40°C add DMDM Hydantoin. Continue to cool to room temperature.

The body cleansing formula had a viscosity of 40,500 mPa (cP) measured using a Brookfield RVT Viscometer with a No. 6 spindle at 10 rpm. Without the thickener, the formula had a viscosity of 3,400 mPa (cP).

### EXAMPLE 6

### COLD PROCESSING

A liquid product similar to that prepared in Example 2 was tested in a surfactant-containing liquid at ambient temperatures to evaluate cold processing properties. The formulation and procedure used were as follows.

| **Ingredients** | **wt%** |
|---|---|
| Deionized Water | QS to 100 |
| Sodium Laureth Sulfate -2(26 wt% active) | 40.00 |
| Cocamidopropyl Betaine (35 wt% active) | 11.50 |
| DMDM Hydantoin | 0.4 |
| Thickener(40 wt% polyol compound, 40 wt% propylene glycol, 20 wt% water) | 1.25 |

**Procedure**: The Sodium Laureth Sulfate -2, Cocamidopropyl Betaine and DMDM Hydantoin were added to the water in order, one at a time, until completely uniform before adding the next ingredient. Once uniform, the thickener was added with stirring at ambient temperature and was continued until a thickening response (viscosity increase) was visually observed. The mixing was continued until completely uniform.

## Claims

1. A liquid composition comprising:
a) 20 to 60 weight percent, based on the total weight of the liquid composition, of alkoxylated glucose derivatives having lipophilic substituents in the form of hydrocarbon or substituted hydrocarbon moieties with from 8 to 30 carbon atoms wherein at least 25 wt.% of the alkoxylated glucose derivatives have 3 moles of said lipophilic substituents per mole of glucose and,
b) an alkylene glycol solvent having from 2 to 5 carbon atoms per molecule.

2. The composition of claim 1 wherein the alkoxylated glucose derivatives have an average of 2.8 to 3.6 moles of the lipophilic substituents per mole of glucose.

3. The composition of claim 1 or 2 wherein at least 50 wt% of the alkoxylated glucose derivatives have 3 moles of the lipophilic substituents per mole of glucose.

4. The composition of any one of claims 1 to 3 wherein less than 75% of the alkoxylated glucose derivatives have one, two or four or more moles of the lipophilic substituents per mole of glucose.

5. The composition of any one of claims 1 to 4 wherein the lipophilic substituents are attached to the glucose derivatives by an ester linkage or an ether linkage.

6. The composition of any one of claim 1 to 5 wherein the glucose derivatives are substituted with from 50 to 400 moles of alkylene oxide per mole of glucose.

7. The composition of claim 6 wherein the alkylene oxide is selected from the group consisting of ethylene oxide, propylene oxide and mixtures thereof.

8. The composition of any one of claims 1 to 7 wherein the glucose derivatives are selected from the group consisting of methyl glucoside, ethyl glucoside, propyl glucoside, butyl glucoside, amyl glucoside and mixtures thereof.

9. The composition of any one of claims 1 to 8 wherein the alkylene glycol is propylene glycol.

10. The composition of claim 9 comprising from 10 to 30 wt% of water, from 30 to 50 wt% of propylene glycol and from 30 to 50 wt% of the alkoxylated glucose derivatives.

11. Use of the liquid composition of any one of claims 1 to 10 as a thickener in liquid surfactant-containing systems.

## Patentansprüche

1. Flüssige Zusammensetzung, umfassend:
a) 20 bis 60 Gewichtsprozent, bezogen auf das Gesamtgewicht der flüssigen Zusammensetzung, an alkoxylierten Glucosederivaten mit lipophilen Substituenten in Form von Kohlenwasserstoff- oder substituierten Kohlenwasserstoffanteilen mit 8 bis 30 Kohlenstoffatomen, worin mindestens 25 Gew.-% der alkoxylierten Glucosederivate 3 Mol der lipophilen Substituenten pro Mol Glucose besitzen, und
b) ein Alkylenglycol-Lösungsmittel mit 2 bis 5 Kohlenstoffatomen pro Molekül.

2. Zusammensetzung nach Anspruch 1, worin die alkoxylierten Glucosederivate durchschnittlich 2,8 bis 3,6 Mol der lipophilen Substituenten pro Mol Glucose besitzen.

3. Zusammensetzung nach Anspruch 1 oder 2, worin mindestens 50 Gew.-% der alkoxylierten Glucosederivate 3 Mol der lipophilen Substituenten pro Mol Glucose besitzen.

4. Zusammensetzung nach einem der Ansprüche 1 bis 3, worin weniger als 75% der alkoxylierten Glucosederivate ein, zwei oder vier oder mehr Mol der lipophilen Substituenten pro Mol Glucose besitzen.

5. Zusammensetzung nach einem der Ansprüche 1 bis 4, worin die lipophilen Substituenten durch eine Esterbindung oder eine Etherbindung mit den Glucosederivaten verbunden sind.

6. Zusammensetzung nach einem der Ansprüche 1 bis 5, worin die Glucosederivate mit 50 bis 400 Mol Alkylenoxid pro Mol Glucose substituiert sind.

7. Zusammensetzung nach Anspruch 6, worin das Alkylenoxid ausgewählt ist aus der Gruppe bestehend aus Ethylenoxid, Propylenoxid und Gemischen davon.

8. Zusammensetzung nach einem der Ansprüche 1 bis 7, worin die Glucosederivate ausgewählt sind aus der Gruppe bestehend aus Methylglucosid, Ethylglucosid, Propylglucosid, Butylglucosid, Amylglucosid und Gemischen davon.

9. Zusammensetzung nach einem der Ansprüche 1 bis 8, worin das Alkylenglycol Propylenglycol ist.

10. Zusammensetzung nach Anspruch 9, umfassend von 10 bis 30 Gew.-% Wasser, von 30 bis 50 Gew.-% Propylenglycol und von 30 bis 50 Gew.-% alkoxylierte Glucosederivate.

11. Verwendung der flüssigen Zusammensetzung nach einem der Ansprüche 1 bis 10 als ein Verdickungsmittel in flüssigen, oberflächenaktive Stoffe enthaltenden Systemen.

## Revendications

1. Composition liquide comprenant
a) de 20 à 60 pour-cent en poids, par rapport au poids total de la composition liquide, de dérivés de glucose alcoxylé comportant des substituants lipophiles sous la forme de fragments d'hydrocarbures ou d'hydrocarbures substitués, contenant de 8 à 30 atomes de carbone, dans laquelle au moins 25 % en poids des dérivés de glucose alcoxylé contiennent 3 moles desdits substituants lipophiles par mole de glucose, et
b) un solvant alkylène-glycol, contenant de 2 à 5 atomes de carbone par molécule.

2. Composition selon la revendication 1, dans laquelle les dérivés de glucose alcoxylé contiennent une moyenne comprise entre 2,8 et 3,6 moles de substituants lipophiles par mole de glucose.

3. Composition selon la revendication 1 ou 2, dans laquelle au moins 50 % en poids des dérivés de glucose alcoxylé contiennent 3 moles de substituants lipophiles par mole de glucose.

4. Composition selon l'une quelconque des revendications 1 à 3, dans laquelle moins de 75 % des dérivés de glucose alcoxylé contiennent une, deux ou quatre moles de substituants lipophiles ou plus par mole de glucose.

5. Composition selon l'une quelconque des revendications 1 à 4, dans laquelle les substituants lipophiles sont liés aux dérivés de glucose par une liaison ester ou par une liaison éther.

6. Composition selon l'une quelconque des revendications 1 à 5, dans laquelle les dérivés de glucose sont substitués par 50 à 400 moles d'oxyde d'alkylène par mole de glucose.

7. Composition selon la revendication 6, dans laquelle l'oxyde d'alkylène est choisi dans l'ensemble comprenant l'oxyde d'éthylène, l'oxyde de propylène et des mélanges de ceux-ci.

8. Composition selon l'une quelconque des revendications 1 à 7, dans laquelle les dérivés de glucose sont choisis dans l'ensemble comprenant le méthyl-glucoside, l'éthyl-glucoside, le propyl-glucoside, le butyl-glucoside, l'amyl-glucoside et des mélanges de ceux-ci.

9. Composition selon l'une quelconque des revendications 1 à 8, dans laquelle l'alkylène glycol est le propylène glycol.

10. Composition selon la revendication 9, contenant de 10 à 30 % en poids d'eau, de 30 à 50 % en poids de propylène glycol et de 30 à 50 % en poids de dérivés de glucose alcoxylé.

11. Utilisation de la composition liquide selon l'une quelconque des révendications 1 à 10, en tant qu'épaississant dans des systèmes liquides contenant des tensioactifs.
